# EUROPEAN PATENT SPECIFICATION

(11) **EP 1 582 247 B1**
(45) Date of publication and mention of the grant of the patent: **24.12.2008**
(21) Application number: 04388020.2
(22) Date of filing: 18.03.2004
(51) Int. Cl.: B01D 35/153

(54) **A filter device**
Filtervorrichtung
Dispositif de filtration

(43) Date of publication of application: 05.10.2005
(73) Proprietor: HARDI INTERNATIONAL A/S, 2630 Taastrup (DK)
(72) Inventor: Joergensen, Nils Joergen, 3070 Snekkersten (DK)
(74) Representative: Sundien, Thomas

(56) References cited:
- US-A- 1 617 048
- US-A- 2 751 930
- US-A- 3 476 251
- US-A- 4 615 812

## Description

The present invention is related a filter device for filtering a liquid, as defined in the preamble of claim 1. The filter device is adapted to be connected to piping or tubing for conveying liquid to the filter device and then from the filter device. One advantageous use of the filter device of the present invention is for the continuous filtering of a liquid to be distributed on a field, such a pesticides or fungicides, using a mobile agricultural sprayer. The filter device may, however, also find use within alternative areas of technology.

A related filter device is disclosed in US 1 613 166, and this known filter device has a casing with a bottom end and an upper open end, and a cover releasably covering the upper end of the casing. The casing has a liquid inlet which is connected to the high pressure side of a piping, and which is arranged at the upper end of the casing. A hollow tubular filter element with perforations forming a mesh-like filter medium filters liquid flowing through the filter device, and extends from the liquid inlet to the bottom end of the casing. A liquid outlet is arranged at about half the distance between the upper end and the bottom end, and liquid entering the filter device flows centrally into the filter element at an open end thereof, partially along the axial passage therein, and then radially outwards into an annular space between the filter element and the casing, from where the filtered liquid is discharged through the liquid outlet.

The known filter device also has an annular valve structure adapted for blocking the liquid inlet. The valve structure is arranged at the upper end of the casing above the filter element and is directly coupled to the cover such that the liquid inlet becomes automatically blocked when the cover is turned for removal thereof to prevent inadvertent discharge of liquid through the upper end of the casing during removal and cleaning of the filter element.

The known filter devices involve the problem that the filter element is not readily accessible when the cover has been removed for replacement or cleaning of the filter element, the user having to introduce his fingers deep into the casing to get a grip on the filter element. Where the nature of the liquid is such that direct contact of the liquid with the skin of the person replacing the filter element would cause harm to that person, the known filter devices may involve a safety risk. This is particularly the case when, depending on the arrangement of the discharge tubing, the casing is filled entirely with liquid, i.e. such that the liquid is at the level of the lid, when the liquid inlet is blocked. A further problem with the device of US 1 613 166 is that the casing must be formed with a large diameter at the upper end to accommodate for the annular valve structure, the filter element being removed centrally through the annular valve structure. A similar device is known from US 1617 048.

US 3 476 251 and US 2 751 930 discloses a fluid filter and valve construction which involves a safety risk In that the user may inadvertently remove the casing lid without having blocked the liquid inlet.

US 4,615,812 discloses a fluid containing system, as in a filter, for toxic or hazardous fluids is provided with rotatable base seals that can be alternatively positioned to permit the flow of fluids from the filter supply line, passing through the filter or, alternatively, the filter supply line can be shut to prevent fluid leakage when the filter is removed.

The aforementioned problems are solved in accordance with the invention as defined in claim 1.

According to one aspect of the invention, the liquid outlet is arranged at the bottom end of the casing whereby it is possible to completely drain the casing when the outlet is connected to a suctioning pump which normally acts to convey the liquid to be filtered through the filter device.

According to another aspect of the invention, the filter element is connected to the lid in such a manner that the filter element is automatically removed from the casing when the lid is removed.

According to an aspect of the invention, the valve structure is automatically moved to a second position blocking the liquid inlet when the lid is manipulated, that is, during the process where the user disengages the lid from the casing with the aim of removing the lid therefrom for removal and cleaning of the filter element. In accordance with a further, presently preferred embodiment of the invention, the lid is rotated for release from the casing, and is coupled to the valve structure via the filter element extending between the lid and the valve structure, the valve structure being rotatable about the same axis as the lid, whereby rotation of the lid brings about a corresponding rotation of the filter element and, hence, the rotation of the valve structure required to move the valve structure from the first position to the second position.

According to a further aspect of the invention the valve structure has separate chambers communicating with the inlet and outlet, respectively, thereby providing a valve structure that may be manufactured easily in a molding process.

A preferred embodiment of the invention will be described in the following with reference to the drawing where
Fig. 1a is a perspective view of a filter device according to the invention,
Fig. 1b is a perspective view of a preferred filter element,
Fig. 2a is a central cross-sectional view of the filter device of fig. 1 a,
Fig. 2b is a sectional view of the filter device of fig. 1 a, as seen along direction B-B in fig. 2a,
Fig. 3a is a perspective view of the lid shown in fig. 1 a as seen from below,
Fig. 3b is a perspective view of a carrier body for supporting the filter element, as seen from above,
Fig. 4a is a perspective view of the valve structure, as seen from above,
Fig. 4b shows the valve structure as seen from below,
Fig. 4c is a cross-sectional view along line A-A in fig. 4b,
Fig. 4d is a sectional view along line B-B in fig. 4c,
Fig. 4e is a sectional view along line C-C in fig. 4c.
Fig. 5a is a perspective view of an alternative embodiment of the filter element, and
Fig. 5b shows an alternative embodiment of the filter device accommodating the filter element of fig. 5a.

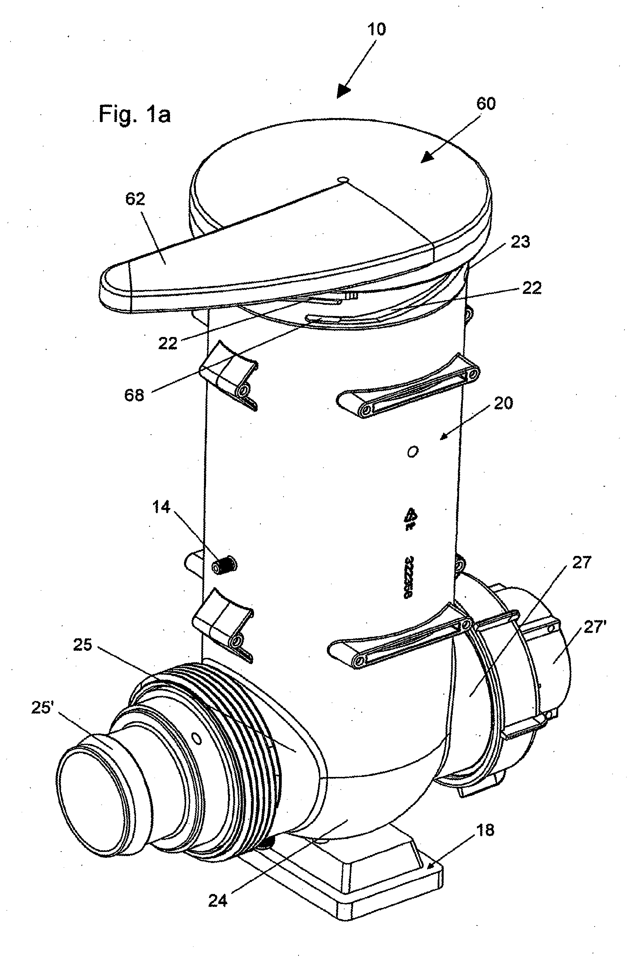

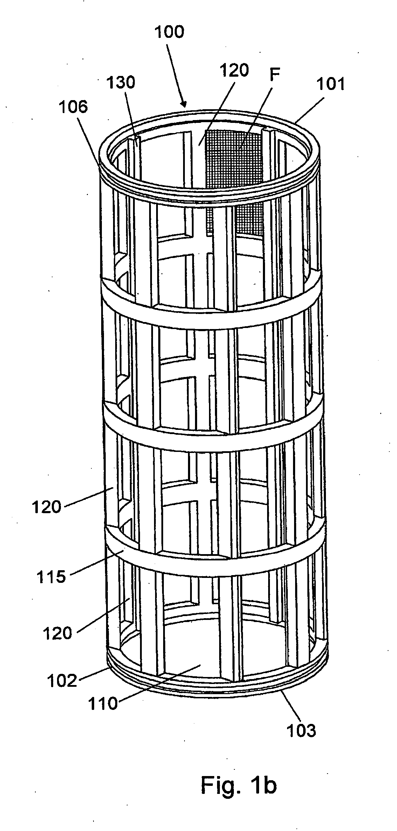

Fig. 1 a shows a filter device according to the invention generally designated reference numeral 10. The filter device 10 is primarily but not exclusively intended for use on a ground traveling agricultural sprayer carrying a container or tank for a liquid, such as a pesticide or a fungicide, a pump and spraying nozzles for distributing the liquid on a field. Such liquid agricultural spraying agents are often hazardous in the sense that direct contact with the skin of a person should be avoided, and the liquid in the tank usually contains solid matter that must be removed to prevent damage to the pump. In use, the filter device 10 is coupled by suitable tubing to the tank and to the pump, such that the liquid drawn from the tank by the pump is filtered by the filter device 10, passed through the pump, and then delivered to the spraying nozzles.

The filter device 10 comprises a metal or plastics casing or receptacle 20 having an essentially cylindrical wall portion, the casing 20 having an open upper end 23 and a lower end 24 defined by a bowl-shaped part. The cylindrical wall extends along the longitudinal axis of the filter device 10. It will be understood that the filter device 10 preferably is to be operated in a position essentially as shown, i.e. in a vertical position with the lower or bottom end 23 facing directly downwards, although the casing may be held slightly inclined.

A base part 18 may be provided for securing the filter device 10 to the frame of the agricultural sprayer, this frame usually being the frame of a tractor or the frame of a trailer drawn by a tractor and carrying the tank for the liquid spraying agent, the pump, and a spraying boom carrying the liquid nozzles for spreading the spraying agent on a field. In one embodiment of the invention the casing has a height of about 50 cm and a diameter of about 16 cm.

The filter device 10 has a removable metal or plastics lid or cover 60 which is adapted to sealingly close the upper end 23 of the casing 20. The lid 60 is manually operable by means of a handle 62, and a number of projecting lugs 68 on the lid 60 cooperate with a corresponding number of open-ended slits 22 extending in a spiral-like manner along a part of the periphery of the casing 20 and adapted to receive a respective lug 68 in a press-fitting manner to securely lock the lid 60 to the casing 20. At the lower end 24, the casing 20 has two opposed openings defined by a respective stud or boss 25, 27 carrying a connecting piece 25', 27' by which the filter device 10 is coupled to the agricultural sprayer tubing. In the preferred embodiment of the filter device 10 stud 25 is preferably connected to a suctioning pump while stud 27 is connected to the tank holding the liquid spraying agent to be filtered by the filter device 10. A first pressure sensor device 14 may be arranged in the casing 20 wall to detect the liquid pressure within the casing 20, suitable wiring being provided for reporting the detected pressure to the operator of the agricultural sprayer.

In the following, the filter device 10 will be described in the context of the aforementioned preferred use where liquid from the tank enters the filter device 10 through stud 27. As will be explained, the liquid is directed to flow in the axial direction of the filter device 10 towards the upper end 23 closed by the lid 60, then to flow through a mesh like filtering medium of a filter element inside the casing 20 and then to flow downwards in the axial direction of the filter device 10 towards the stud 25.

Fig. 1b shows a filter element 100 to be located within the casing 20 to provide for a filtering of the liquid spraying agent. The filter element 100 is a molded stable and rigid structure having a cylindrical contour and comprising a plurality of annular ribs 115 molded integrally with number of longitudinally extending ribs 120 to define a rigid support for a metal or plastics mesh-like filtering medium F (only shown schematically in an upper region of the filter element 100 for the sake of clarity) which spans the interspaces between adjacent annular ribs 115 and adjacent longitudinal ribs 120. At the upper end 101 of the filter element 100, an uppermost annular rib 115 has a peripheral groove 106, and the annular rib 115 at the lower end 103 of the filter element 100 has a similar peripheral groove 102. Offset by 90° in the peripheral direction are inwardly projecting longitudinal projections 130 formed along selected ones of the longitudinal ribs 120. In the shown embodiment every second one of the longitudinal ribs 120 are provided with such projections 130.

As mentioned, in the preferred use of the filter device 10 with the filter element 100, liquid flows axially into the interior of the filter element 100 at the bottom 110 thereof towards the upper end and radially out of the filter element 100 through the mesh-like filtering medium F. During this filtering process any solid matter above a certain grain size in the liquid is retained by and normally also deposited on the filtering medium F.

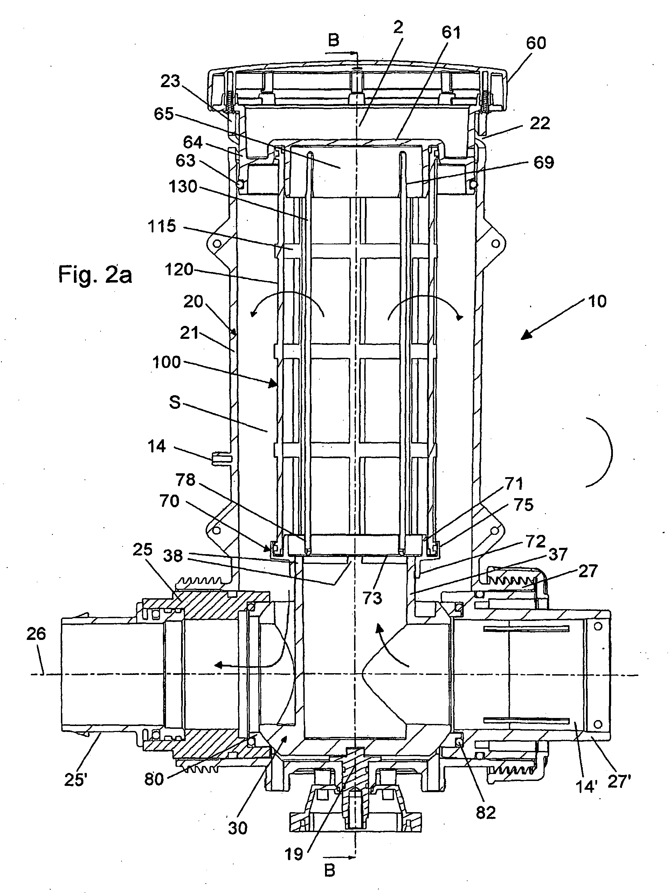

Fig. 2a is a central cross-sectional view of the filter device 10 showing the filter element 100 removably mounted therein in proper position ready for use wherein an annular space S extends around the filter element 100. The lid 60 seals the upper end 23 of the casing 20 and provides a closure 61 for the upper end 101 of the filter element 100. Specifically, a flat surface 61 of the lid 60 bears against the uppermost annular rib 115 of the filter element 100, and an annular depending wall 65 on the lid 60 seals against an O-ring mounted in the peripheral groove 106 of the filter element 100 such that liquid flowing through the filter device 10 will always pass through the filtering medium F.

At the lower end 103 the filter device 10 has a metal or plastics valve structure generally designated 30 by means of which the filter device 10 may selectively be put in two different positions, a first one where the filter device 10 communicates with the pump through stud 25 and with the tank holding the liquid through stud 27, and a second one wherein both studs 25, 27 are blocked such that the interior of the casing 20 does not communicate with the exterior. The valve structure 30 has an entry port and an exit port, and liquid enters the valve structure 30 through the entry port and eventually flows through the exit port of the valve structure 30. The valve structure 30 supports the filter element 100 at the bottom end 103 thereof, an intermediate carrier body 70 to be discussed below being arranged between the valve structure 30 and the filter element 100, with an O-ring mounted in the lowermost peripheral groove 102 of the filter element 100 sealing against the carrier body 70.

Fig. 2a shows the first position of the valve structure 30, in which liquid is allowed to flow along the path through the filter device 10 indicated by the arrows.

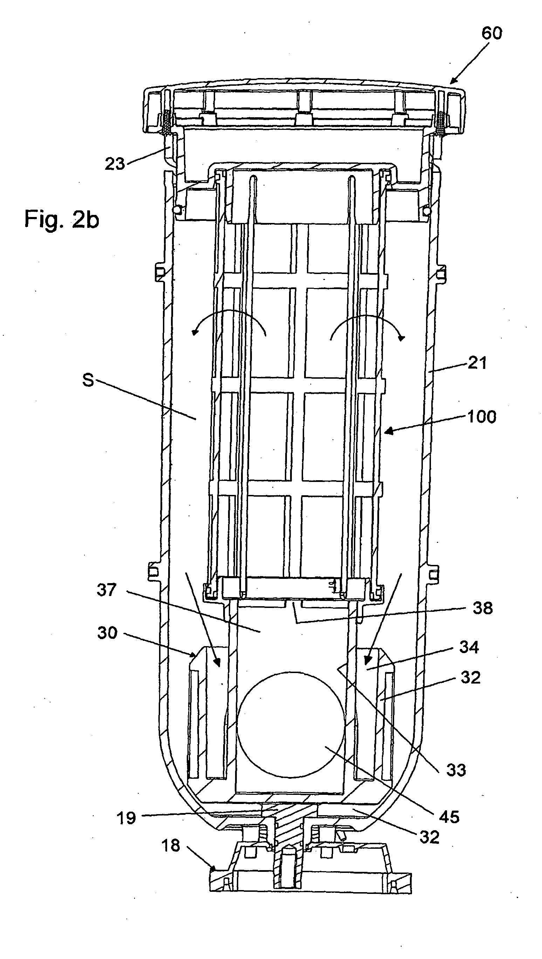

Fig. 2b shows a cross-section of the filter device of fig. 1 a as seen along direction B-B in fig. 2a. The drawing shows the entry port 45 of the valve structure 30, as well as a wall 37 which defines an annular channel or passage 34 within the valve structure 30. The annular passage 34 communicates with the exit port of the valve structure 30, the exit port being located opposite entry port 45. In the first position of the valve structure 30 shown in figs. 2a and 2b the entry port 45 is aligned with stud 27, and the exit port is aligned with stud 25 to provide for a direct flow there-between in the general direction indicated by line 26. A pressure sensor 14' may be arranged in stud 27, and this sensor may cooperate with sensor 14 mounted in casing wall 21 to allow the user to monitor a pressure difference, and the hence the efficiency of the filter element 100.

In operation, with the valve structure 30 in the first position, liquid enters casing 20 at stud 27, passes through valve structure 30, where the liquid is redirected by wall 37 to flow upwards into the interior of filter element 100, passes through the filter medium F into an annular space S between the filter element 100 and the casing 20, then flows into the annular passage 34, and exits filter device 10 at stud 25. It will be noted that studs 25 and 27 preferably define coinciding flow axes, as indicated by reference numeral 26.

The valve structure 30 is mounted so as to be rotatable about the longitudinal axis 2 of the filter device 10, whereby the valve structure 30 may be rotated about axis 2 from the first position to the second position, preferably by an angle close to 90°, or at least to an extend where the entry port 45 and the exit port of the valve structure 30 are no longer aligned with the corresponding one of the studs 25, 27, such that no liquid may flow into or out of the filter device 10 through any of the two studs 25, 27. This is of particular advantage in agricultural sprayers where a high liquid pressure typically reigns in the tubing on both connecting sides of the filter device, even when the pump has been stopped.

To allow for the rotational movement, the valve structure 30 is rotatably supported at the lower end 24 of the casing 20, preferably by a pin 19 extending into the bowl-shaped part 24 from the base part 18. In the area of each of the studs 25, 27, the casing 20 is provided with sealing means 80, 82 bearing against the outer surface of outer wall 32 of the valve structure 30 such that the valve structure 30 provides the only effective passage into and out from the filter device 10. The pin 19 may be accessible for a user and have a key allowing for the user to manually rotate the valve structure 30 for service or repair. Alternatively, the pin 19 may be coupled to a motor whereby the position of the valve structure 30 may be remote-controlled. However, as will be explained below, this is not the way the valve structure 30 is normally operated.

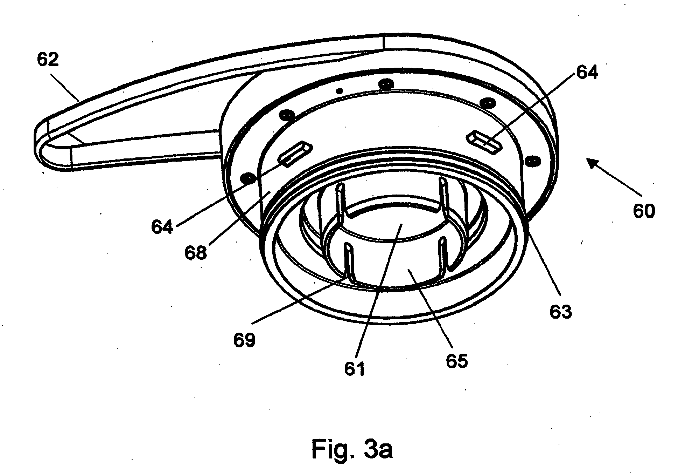

Fig. 3a shows the lid 60 in greater details, as seen from below. The lid 60 has an outer peripheral wall 68 with an O-ring received in a peripheral groove 63 sealing the lid 60 against the inside surface of the cylindrical wall 21 of casing 20. Depending inner wall 65 which is sized to fit into the interior of the filter element 100 is formed with a plurality of elongated slits 69, each designed to receive an upper part of one of the inwardly directed projections 130 of the filter element 100 upon proper alignment thereof. The projections 130 may engage the slits 69 in a press-fitting manner to provide for a releasable connection between the lid 60 and the filter element 100.

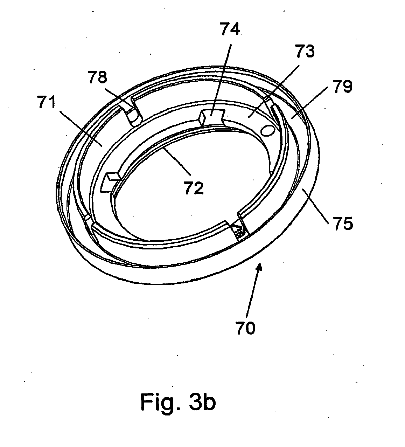

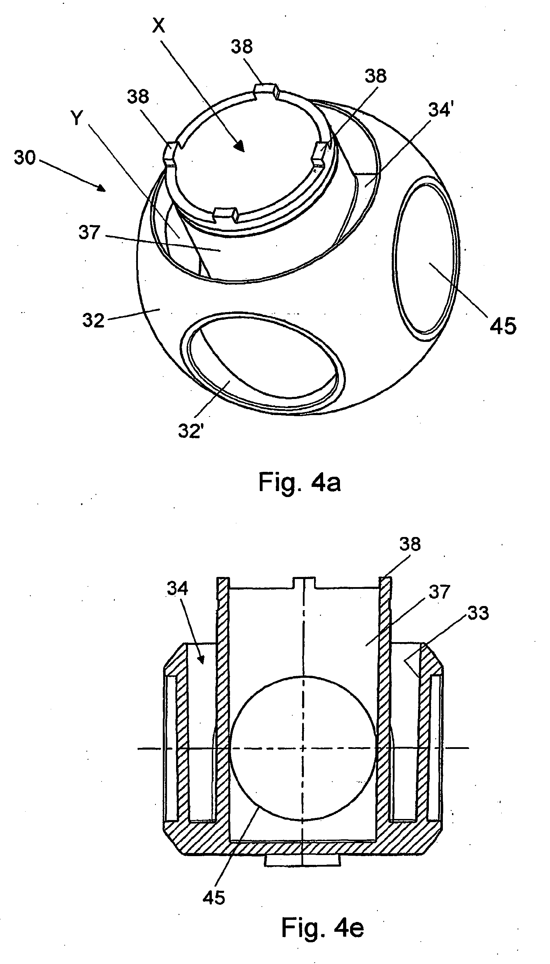

Fig. 3b shows the carrier body 70 supported by the valve structure 30. The features of this metal or plastics carrier body 70 to be discussed below may be incorporated in the valve structure 30 proper in the sense that the carrier body 70 does not need to be a separate component, although this is presently preferred with the view of manufacturing the valve structure in a simple plastics molding process. Carrier body 70 is an annular structure with a central annular wall 73 adapted to rest on top of the upright wall 37 of the valve structure 30. The wall 73 has a plurality of recesses 74 adapted to receive a corresponding number of lugs 38 (see fig. 4a) on the wall 37 such that the carrier body 70 and the valve structure 30 are locked against mutual rotation when the carrier body 70 properly aligned with the lugs 38 is supported on the valve structure 30. The carrier body 70 moreover has an annular channel 79 defined by an inner upright wall 71 and an outer upright wall 75. This annular channel 79 is adapted to receive the lower end 103 of the filter element 100 such that the aforementioned O-ring in groove 102 of the filter element 100 seals against the outer upright wall 75. As seen, the inner upright wall has a plurality of elongated slits 78, corresponding in number and arrangement to the inwardly directed projections 130 on filter element 100 whereby the carrier body 70 upon proper alignment of the filter element 100 will lock the filter element 70 against any rotation with respect to the carrier body 70 and hence with respect to the valve structure 30. Preferably, the engagement of the filter element 100 with the carrier body 70 is such that the carrier body 70 remains in place on the valve structure 30 when the filter element 100 is moved axially upwards for replacement; the carrier body 70 may be secured to the valve structure 30 by any conventional means, even by a press-fit between the carrier body 70 and the valve structure 30.

As will appear from fig. 2a, with the filter element 100 properly received within the casing 20, i.e. with the projections 130 received by slits 78, and with the lid 60 applied on the casing 20 with the projections 130 received in the slits 69, any rotation of the lid 60 about longitudinal axis 2 will impart a corresponding rotation of the filter element 100, the carrier body 70, and hence the valve structure 30 about the axis 2.

The following discussion will describe what happens when lid 60 is rotated, normally by a user gripping handle 62, for the purpose of gaining access to the interior of casing 20 for replacement or cleaning of the filter element 100 and/or the inside of the casing 20. It will be understood that the inverse process takes place when the lid 60 is reapplied to the casing and rotated about axis 2 so as to lock the lid 60 to the casing 20 and bring the filter device 10 to the operational state where the valve structure 30 is in the aforementioned first position illustrated in figs. 2a and 2b.

As stated above, in use of the filter device 10 any rotation of the lid 60 will bring about a corresponding rotation of the valve structure 30 about the axis 2, and vice versa, through a corresponding rotation of the filter element 100. Accordingly, when the lid 60 is rotated, the valve structure 30 will rotate from the first position towards the second position wherein the outlet stud 25 is closed, and inlet stud 27 is closed thereby effectively preventing any liquid from rising up into the casing 20. The engagement of the lid 60 with the upper part 23 of the casing 20 is so designed that the valve structure 30 reaches its second position before the lid 60 may be removed, and before the seal between the lid 60 and the casing 20 is released. Through this measure, the user changing the filter element 100 is at no risk of being hit by any of the hazardous liquid normally flowing through the filter device 10, since no such liquid under pressure is ejected from the casing 20 when the lid 60 is removed. It is noted that this rotational movement of the lid 60 through an angle of typically 90°, or about 90°, causes the lugs 64 on the lid 60 to disengage the open-ended slits 22 such that the lid may be pulled up and away from the casing 20.

If the projections 130 engage the slits 69 in a press-fitting manner the filter element 100 may be removed together with the lid 60 for replacement or cleaning. If the filter element 100 is to be cleaned, such as by using running water, a press-fit may be preferred since this may effectively allow the user to carry out this operation without touching the filter element 100. However, it may be preferred to remove the filter element 100 from the carrier body 70 in a separate operation.

Fig. 4a shows the valve structure 30 in more details. An outer wall 32 defines the outer contour of the integrally molded valve structure 30, and this contour may be generally spherical to allow for a good seal between the valve structure 30 and the inside of the casing 20. Centrally within the valve structure is a tubular upright structure defined by a cylindrical and semicylindrical wall 37 which together with a wall 34' divides the valve structure 30 into two separate internal valve chambers, a first one X having the inlet port 45 and communicating with the inside of filter element 100 as has been described, and a second one Y having the aforementioned exit port shown by reference numeral 40 and communicating with the space within casing 20 outside the filter element 100.

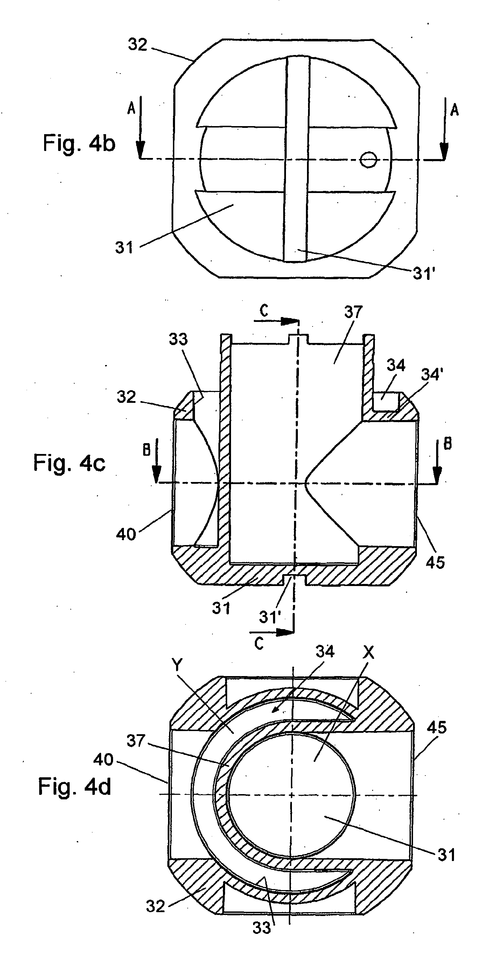

Fig. 4b shows the flat bottom wall 31 of valve structure 30 as viewed from below, and shows a recess 31' which pin 19 is adapted to engage for the purpose of transmitting rotational movement thereof to the valve structure 30. A drain may be formed in the bottom wall 31 for draining liquid in the casing 20 when performing service on the valve structure 30. Fig. 4c is a cross-sectional view along line A-A in fig. 4b and showing the aforementioned two valve chambers in more details, including the annular passage 34 which extends around the wall 37 from a low-depth area above inlet port 45 where the bottom surface of the passage 34 is defined by the wall 34' to an area at the exit port 40 where the bottom surface of the passage 34 is defined by the bottom wall 31 of the valve structure 30. Fig. 4d is a sectional view along line B-B in fig. 4c and shows how passage 34 is delimited on the one hand by inner surface 33 of wall 32 and on the other hand by the outer surface of wall 37. Fig. 4e is a sectional view along line C-C in fig. 4c and shows the valve structure 30 in further details.

Fig. 4a, and also fig. 4d and 4e, show two opposed recesses 32' formed in the outer wall 32 of the valve structure 30. The purpose of these recesses 32' is merely to save weight by locally reducing the thickness of wall 32, and thus the amount of plastics material used for making the valve structure 30.

It is noted that in some cases it may be desirable, to provide for a different structure of the filter device 10 wherein the studs 25, 27 rather than being aligned are arranged in an angular relationship, such as at 90° to one another, in which case the valve structure 30 should be configured accordingly to allow for a desired flow of the liquid through the filter device 10. Moreover, although a preferred embodiment where liquid flows from the inside of the hollow filter element 100 to the outside has been described, an alternative mode of operation of the filter device 10 is possible wherein liquid flows from the outside of the hollow filter element 100 and into the inside thereof through filter medium F. Stud 25 would then serve as an inlet stud while stud 27 would serve as an outlet stud. In this connection, although not presently preferred, it is even possible to form the stud 27 at the bottom 24 of the filter device 10 with liquid flowing straight out of, or in to, the filter element 100 along axis 2. Moreover, there may be cases where it is desirous to configure the valve structure 30 such that rotation thereof about axis 2 only blocks one of the studs 25, 27, such as the one on the high-pressure side of the filter device 10, the other remaining open.

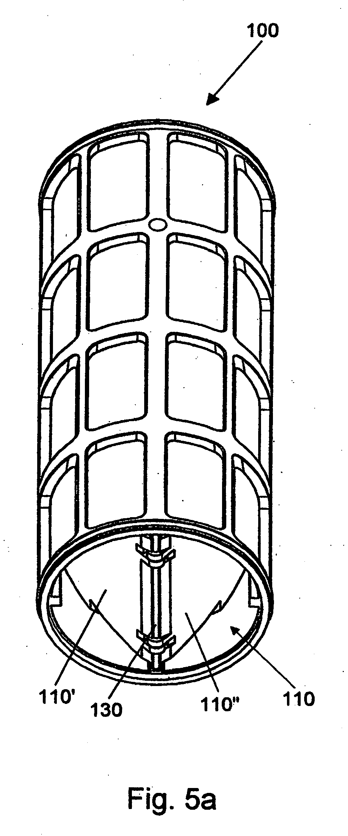

At the bottom end 103, the filter element 100 may comprise a flap-like valve 110 or a similar device allowing liquid loaded with solid particles to flow into the interior of the filter element 100 in the axial direction but closing to maintain any solid particles retained by the filtering medium F within the filter element 100 when the liquid ceases to flow and the filter element 100 is removed from the carrier body 70. Fig. 5a shows a filter element 100' with such a flap-like valve 110 including two plate-like flaps 110', 110" pivotally connected two a bar 130 extending across the lower end 103 of the filter element 100' and shown in the closed position of the valve 110 wherein any collected solid matter within the filter element 100' will be retained wherein on the upper surface of the flaps 110', 110". In the open position of the valve 110, the two flaps 110', 110" will turn upwards about bar 130 to a position wherein they extend parallel or essentially parallel with each other and with the longitudinal axis of the filter element 100', i.e. the longitudinal axis 2 of the filter device. The flap-like valve 110 may be configured to open automatically by the flaps 110', 110" engaging portions of the carrier body 70 or other areas of the filter device 10 when the filter element 100 is received within the casing 20, or the valve 110 may be configured so as to open upon a liquid being forced through the filter device 10.

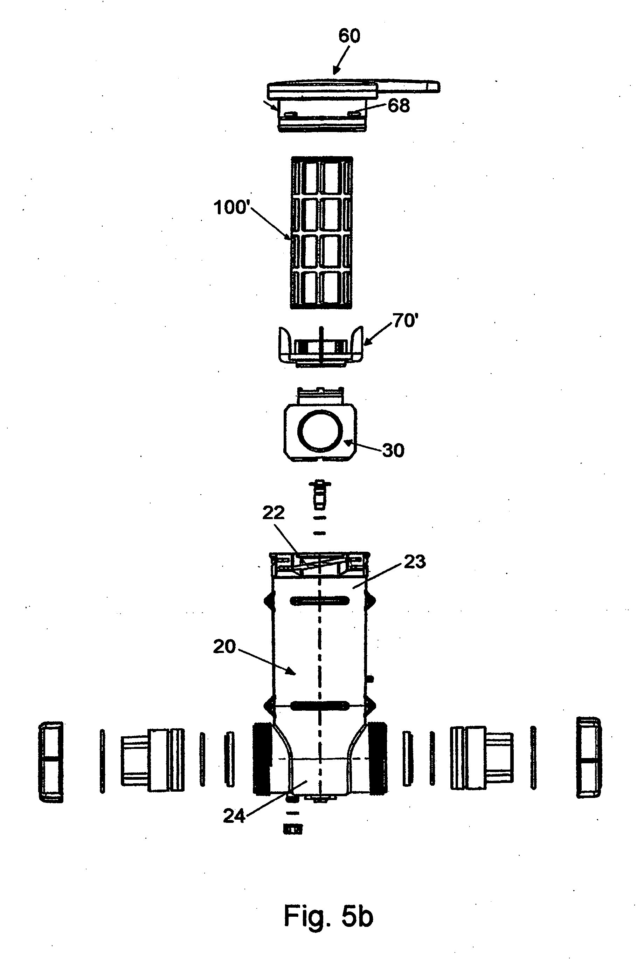

Fig. 5b shows an alternative embodiment of the filter device 10 wherein the carrier body 70' is specifically adapted so as to open the valve 110 when the filter element 100' is placed on top of the carrier body 70'. This drawing also shows the helically extending slits 22 receiving the lugs 68 on lid 60 so as to maintain the lid 60 in place.

Although it is presently preferred to couple the lid 60 to the valve structure 30 by means of the filter element 100, and to transmit rotational movement by a corresponding rotational movement of the filter element 100, other structures are possible, such as a rod-like extension mounted centrally on wall 61 of lid 60 and reaching into the casing 20 to releasably engage centrally with eg. the bottom 31 of the valve structure 30 such that rotational movement of the lid 60 brings about a corresponding rotational movement of the valve structure 30.

## Claims

1. A filter device (10), particularly for use with an agricultural sprayer, comprising
a casing (20) with a bottom end (24) and an upper open end (23), a liquid inlet (27) and a liquid outlet (25),
a rotatable lid (60) for releasable covering of said casing (20) at said upper end (23),
a valve structure (30) movable between a first position wherein said liquid inlet (27) is open and a second position wherein said liquid inlet (27) is blocked,
a filter element (100) including a mesh-like filtering medium (F) and being releasably arranged within said casing (20),
said valve structure (30) being arranged at said bottom end (24),
said valve structure (30) being rotatable about an axis (2) extending between said upper end (23) and said bottom end (24), between said first position and said second position of said valve structure (30)
said liquid inlet (27) being arranged at said bottom end (24), and
said filter element (100) being arranged between said valve structure (30) and said lid (60),
**characterised in**
said filter element (100) being for filtering liquid flowing from said liquid inlet (27) to said liquid outlet (25) via a space S between said filter element (100) and said casing (20),
a coupling between said lid (60) and said filter element (100) for driving said filter element (100) to rotate on rotation of said lid, and
a coupling between said filter element (100) and said valve structure (30) for driving said valve structure (30) to rotate about said axis (2) on rotation of said filter element (100).

2. A filter device (10) according to claim 1, including seals (102, 106) for sealing said filter element (100) against said valve structure (30) and against said lid (60), respectively.

3. A filter device (10) according to claim 1 or 2, said liquid outlet (25) being arranged at said bottom end (24) of said casing (20).

4. A filter device (10), according to claim 3, said valve structure (30) being configured to block said liquid outlet (25) in said second position of said valve structure (30).

5. A filter device (10) according to any of the preceding claims, said lid (60) being adapted to engage and disengage said casing (20) through said rotation of said lid (60) about said axis (2).

6. A filter device (10) according to any of the preceding claims, said filter element (100) being releasably coupled to said lid (60) and/or said valve structure (30).

7. A filter device (10) according to any of the preceding claims, said filter element (100) having a lower end (103) and an upper end (101) and including an essentially rigid elongated structure (115, 120) supporting said mesh-like filtering medium (F), said filter element (100) including an internal axial flow passage wherein said liquid flows.

8. A filter device (10) according to the preceding claim, said filter element (100) being essentially tubular, said filter device (10) including an annular space (S) between said filter element (100) and said casing (20).

9. A filter device according to claim 7 or 8, said valve structure (30) including a chamber (X) having an entry port (45) and communicating in said first position of said valve structure (30) with said liquid inlet (27) and said internal passage of said filter element (100).

10. A filter device according to claims 8 and 9, said valve structure (30) including a second chamber (Y) having an exit port (40) and communicating in said first position of said valve structure (30) with said liquid outlet (25) and with said space (S).

11. A filter device according to any of the preceding claims, said filter element (100) having at a bottom end (103) thereof a filter element valve (110) for retaining collected solid matter within said filter element (100) on removal of the filter element (100) from said casing (20), said valve (110) closing upon removal of said filter element (100) from said casing (20) and said valve (110) being open in use of said filter device (10).

12. A filter device according to any of the preceding claims, said lid (60) including a gripping handle (62).

13. A filter device according to any of the preceding claims, said coupling being by said filter element (100) and said lid (60) having complementary engagement means (130, 69) and said filter element (100) and said valve structure (30) having complementary engagement means (130, 78) whereby rotation of said lid (60) causes rotation of said filter element 100) and of said valve structure (30).

14. A filter device according to the preceding claim, said complementary engagement means being selected from slits and projections.

15. A filter device according to any of the preceding claims, said lid being removable only when said liquid inlet is blocked.

16. An agricultural sprayer including a frame, a tank for liquid to be distributed, a spray boom carrying discharge nozzles, and a filter device according to any of the preceding claims, said filter device (10) being coupled to said tank on the one hand via said liquid inlet (27) of said filter device (10) and to said pump one the other hand, via said liquid outlet (25) of said filter device (10).

## Patentansprüche

1. Filtervorrichtung (10), insbesondere zum Gebrauch in einer landwirtschaftlichen Sprüheinrichtung, mit
einem Gehäuse (20) mit einem unteren Ende (24) und einem oberen offenen Ende (23), einem Flüssigkeitseinlass (27) und einem Flüssigkeitsauslass (25),
einem drehbaren Deckel (60) zum lösbaren Abdecken des Gehäuses (20) an dem oberen Ende (23),
einem Ventilaufbau (30), der zwischen einer ersten Position, in der der Flüssigkeitseinlass (27) offen ist, und einer zweiten Position beweglich ist, in der der Flüssigkeitseinlass (27) versperrt ist,
einem Filterelement (100), das ein maschenartiges Filtermittel (F) aufweist und lösbar innerhalb des Gehäuses (20) angeordnet ist,
wobei der Ventilaufbau (30) an dem unteren Ende (24) angeordnet ist,
wobei der Ventilaufbau (30) um eine Achse (2), die sich zwischen dem oberen Ende (23) und dem unteren Ende (24) erstreckt, zwischen der ersten Position und der zweiten Position des Ventilaufbaus (30) drehbar ist,
wobei der Flüssigkeitseinlass (27) an dem unteren Ende (24) angeordnet ist, und
wobei das Filterelement (100) zwischen dem Ventilaufbau (30) und dem Deckel (60) angeordnet ist,
**gekennzeichnet dadurch, dass**
das Filterelement (100) zum Filtern einer Flüssigkeit dient, die von dem Flüssigkeitseinlass (27) über einen Raum S zwischen dem Filterelement (100) und dem Gehäuse (20) zu dem Flüssigkeitsauslass (25) strömt,
durch eine Kopplungseinrichtung zwischen dem Deckel (60) und dem Filterelement (100) zum Antreiben des Filterelements (100), damit es sich bei einer Drehung des Deckels dreht, und
durch eine Kopplungseinrichtung zwischen dem Filterelement (100) und dem Ventilaufbau (30) zum Antreiben des Ventilaufbaus (30), damit er sich bei einer Drehung des Filterelements (100) dreht.

2. Filtervorrichtung (10) gemäß Anspruch 1, die Dichtungen (102, 106) aufweist, um das Filterelement (100) gegen den Ventilaufbau (30) bzw. den Deckel (60) abzudichten.

3. Filtervorrichtung (10) gemäß Anspruch 1 oder 2, wobei der Flüssigkeitsauslass (25) an dem unteren Ende (24) des Gehäuses (20) angeordnet ist.

4. Filtervorrichtung (10) gemäß Anspruch 3, wobei der Ventilaufbau (30) aufgebaut ist, um den Flüssigkeitsauslass (25) in der zweiten Position des Ventilaufbaus (30) zu versperren.

5. Filtervorrichtung (10) gemäß einem der vorangehenden Ansprüche, wobei der Deckel (60) angepasst ist, das Gehäuse (20) durch Drehung des Deckels (60) um die Achse (2) in Eingriff zu bringen und zu lösen.

6. Filtervorrichtung (10) gemäß einem der vorangehenden Ansprüche, wobei das Filterelement (100) lösbar an den Deckel (60) und/oder den Ventilaufbau (30) gekoppelt ist.

7. Filtervorrichtung (10) gemäß einem der vorangehenden Ansprüche, wobei das Filterelement (100) ein unteres Ende (103) und ein oberes Ende (101) aufweist und einen im Wesentlichen steifen verlängerten Aufbau (115, 120) aufweist, der das maschenartige Filtermittel (F) stützt,
wobei das Filterelement (100) einen inneren Axialströmungsdurchgang aufweist, in dem die Flüssigkeit strömt.

8. Filtervorrichtung (10) gemäß dem vorangehenden Anspruch, wobei das Filterelement (100) im Wesentlichen rohrförmig ist und wobei die Filtervorrichtung (10) einen ringförmigen Raum (S) zwischen dem Filterelement (100) und dem Gehäuse (20) aufweist.

9. Filtervorrichtung gemäß Anspruch 7 oder 8, wobei der Ventilaufbau (30) eine Kammer (X) mit einer Eintrittsöffnung (45) aufweist, die bei der ersten Position des Ventilaufbaus (30) mit dem Flüssigkeitseinlass (27) und dem inneren Durchgang des Filterelements (100) in Verbindung steht.

10. Filtervorrichtung gemäß Anspruch 8 und 9, wobei der Ventilaufbau (30) eine zweite Kammer (Y) mit einem Austrittsanschluss (40) aufweist, die bei der ersten Position des Ventilaufbaus (30) mit dem Flüssigkeitsauslass (25) und mit dem Raum (S) in Verbindung steht.

11. Filtervorrichtung gemäß einem der vorangehenden Ansprüche, wobei das Filterelement (100) bei seinem unteren Ende (103) ein Filterelementventil (110) zum Zurückhalten gesammelter Feststoffe innerhalb des Filterelements (100) beim Entfernen des Filterelements (100) aus dem Gehäuse (20) aufweist, wobei sich das Ventil (110) beim Entfernen des Filterelements (100) aus dem Gehäuse schließt und wobei das Ventil (110) bei der Verwendung der Filtervorrichtung (10) geöffnet ist.

12. Filtervorrichtung gemäß einem der vorangehenden Ansprüche, wobei der Deckel (60) einen Griff (62) aufweist.

13. Filtervorrichtung gemäß einem der vorangehenden Ansprüche, wobei die Kopplungseinrichtung bei dem Filterelement (100) und dem Deckel (60) komplementäre Eingriffseinrichtungen (130, 69) aufweist und das Filterelement (100) und der Ventilaufbau (30) komplementäre Eingriffseinrichtungen (130, 78) aufweisen, wobei eine Drehung des Deckels (60) eine Drehung des Filterelements (100) und des Ventilaufbaus (30) bewirkt.

14. Filtervorrichtung gemäß dem vorangehenden Anspruch, wobei die komplementären Eingriffseinrichtungen aus Schlitzen und Vorsprüngen ausgewählt sind.

15. Filtervorrichtung gemäß einem der vorangehenden Ansprüche, wobei der Deckel nur entfernbar ist, wenn der Flüssigkeitseinlass gesperrt ist.

16. Landwirtschaftliche Sprüheinrichtung mit einem Rahmen, einem Tank für die zu verteilende Flüssigkeit, einem Sprühausleger, der Auslassdüsen trägt, und einer Filtervorrichtung gemäß einem der vorangehenden Ansprüche, wobei die Filtervorrichtung (10) einerseits über den Flüssigkeitseinlass (27) der Filtervorrichtung (10) an den Tank gekoppelt ist und andererseits über den Flüssigkeitsauslass (25) der Filtervorrichtung (10) an die Pumpe gekoppelt ist.

## Revendications

1. Dispositif de filtration (10), en particulier pour une utilisation avec un pulvérisateur agricole, comprenant:
une enceinte (20) présentant une extrémité inférieure (24) et une extrémité supérieure ouverte (23), une entrée de liquide (27) et une sortie de liquide (25),
un couvercle rotatif (60) pour recouvrir de façon amovible ladite enceinte (20) à ladite extrémité supérieure (23),
une structure de soupape (30) mobile entre une première position dans laquelle ladite entrée de liquide (27) est ouverte et une deuxième position dans laquelle ladite entrée de liquide (27) est bloquée,
un élément de filtre (100) comprenant un milieu filtrant en forme de tamis (F) et agencé de façon amovible à l'intérieur de ladite enceinte (20),
ladite structure de soupape (30) étant agencée à ladite extrémité inférieure (24),
ladite structure de soupape (30) étant rotative autour d'un axe (2) s'étendant entre ladite extrémité supérieure (23) et ladite extrémité inférieure (24), entre ladite première position et ladite deuxième position de ladite structure de soupape (30),
ladite entrée de liquide (27) étant prévue à ladite extrémité inférieure (24), et
ledit élément de filtre (100) étant disposé entre ladite structure de soupape (30) et ledit couvercle (60),
**caractérisé en ce que**:
ledit élément de filtre (100) sert à filtrer le liquide qui s'écoule à partir de ladite entrée de liquide (27) vers ladite sortie de liquide (25) par l'intermédiaire d'un espace (S) entre ledit élément de filtre (100) et ladite enceinte (20),
un couplage entre ledit couvercle (60) et ledit élément de filtre (100) est prévu pour entraîner ledit élément de filtre (100) à tourner lors de la rotation dudit couvercle, et
un couplage entre ledit élément de filtre (100) et ladite structure de soupape (30) est prévu pour entraîner ladite structure de soupape (30) à tourner autour dudit axe (2) lors de la rotation dudit élément de filtre (100).

2. Dispositif de filtration (10) selon la revendication 1, comprenant des joints (102, 106) pour isoler ledit élément de filtre (100) par rapport à ladite structure de soupape (30) et par rapport audit couvercle (60), respectivement.

3. Dispositif de filtration (10) selon la revendication 1 ou 2, dans lequel ladite sortie de liquide (25) est prévue à ladite extrémité inférieure (24) de ladite enceinte (20).

4. Dispositif de filtration (10) selon la revendication 3, dans lequel ladite structure de soupape (30) est configurée pour bloquer ladite sortie de liquide (25) dans ladite deuxième position de ladite structure de soupape (30).

5. Dispositif de filtration (10) selon l'une quelconque des revendications précédentes, dans lequel ledit couvercle (60) est adapté pour engager et désengager ladite enceinte (20) par l'intermédiaire de la rotation dudit couvercle (60) autour dudit axe (2).

6. Dispositif de filtration (10) selon l'une quelconque des revendications précédentes, dans lequel ledit élément de filtre (100) est couplé de façon détachable audit couvercle (60) et/ou à ladite structure de soupape (30).

7. Dispositif de filtration (10) selon l'une quelconque des revendications précédentes, dans lequel ledit élément de filtre (100) présente une extrémité inférieure (103) et une extrémité supérieure (101) et comprend une structure allongée essentiellement rigide (115, 120) pour supporter ledit milieu filtrant en forme de tamis (F), ledit élément de filtre (100) comprenant un passage d'écoulement axial interne dans lequel ledit liquide s'écoule.

8. Dispositif de filtration (10) selon l'une quelconque des revendications précédentes, dans lequel ledit élément de filtre (100) est essentiellement tubulaire, ledit dispositif de filtration (10) comprenant un espace annulaire (S) entre ledit élément de filtre (100) et ladite enceinte (20).

9. Dispositif de filtration selon la revendication 7 ou 8, dans lequel ladite structure de soupape (30) comprend une chambre (X) présentant un port d'entrée (45) et communiquant dans ladite première position de ladite structure de soupape (30) avec ladite entrée de liquide (27) et ledit passage interne dudit élément de filtre (100).

10. Dispositif de filtration selon les revendications 8 et 9, dans lequel ladite structure de soupape (30) comprend une deuxième chambre (Y) présentant un port de sortie (40) et communiquant dans ladite première position de ladite structure de soupape (30) avec ladite sortie de liquide (25) et avec ledit espace (S).

11. Dispositif de filtration selon l'une quelconque des revendications précédentes, dans lequel ledit élément de filtre (100) présente à une extrémité inférieure (103) de celui-ci une soupape d'élément de filtre (110) servant à retenir la matière solide collectée à l'intérieur dudit élément de filtre (100) au moment de l'enlèvement de l'élément de filtre (100) de ladite enceinte (20), ladite soupape (110) se fermant au moment de l'enlèvement dudit élément de filtre (100) de ladite enceinte (20), et ladite soupape (110) étant ouverte lorsque l'on utilise ledit dispositif de filtration (10).

12. Dispositif de filtration selon l'une quelconque des revendications précédentes, dans lequel ledit couvercle (60) comprend une poignée de prise (62).

13. Dispositif de filtration selon l'une quelconque des revendications précédentes, dans lequel ledit couplage est réalisé par ledit élément de filtre (100) et ledit couvercle (60) présentant des moyens d'engagement complémentaires (130, 69), et ledit élément de filtre (100) et ladite structure de soupape (30) présentant des moyens d'engagement complémentaires (130, 78) grâce auxquels la rotation dudit couvercle (60) entraîne la rotation dudit élément de filtre (100) et de ladite structure de soupape (30).

14. Dispositif de filtration selon l'une quelconque des revendications précédentes, dans lequel lesdits moyens d'engagement complémentaires sont sélectionnés parmi des fentes et des saillies.

15. Dispositif de filtration selon l'une quelconque des revendications précédentes, dans lequel ledit couvercle peut être enlevé uniquement lorsque ladite entrée de liquide est bloquée.

16. Pulvérisateur agricole comprenant un châssis, un réservoir de liquide à distribuer, une rampe de pulvérisation comprenant des buses de décharge et un dispositif de filtration selon l'une quelconque des revendications précédentes, ledit dispositif de filtration (10) étant couplé audit réservoir d'une part par l'intermédiaire de ladite entrée de liquide (27) dudit dispositif de filtration (10) et à ladite pompe d'autre part, par l'intermédiaire de ladite sortie de liquide (25) dudit dispositif de filtration (10).
